# EUROPEAN PATENT SPECIFICATION

(11) **EP 4 043 767 B1**
(45) Date of publication and mention of the grant of the patent: **10.12.2025**
(21) Application number: 21825988.5
(22) Date of filing: 13.04.2021
(51) Int. Cl.: F23N 1/00, F16K 31/44, F16K 11/083, F16K 35/02, F16K 37/00, F16K 5/02, F16K 5/10, F24H 15/219, F24H 15/31, F24C 3/12, F24H 9/20, F16K 35/04

(54) **PLUG VALVE WITH A DAMPING SWITCH AND A MICROSWITCH, AND GAS APPLIANCE**
KÜKENVENTIL MIT EINEM DÄMPFUNGSSCHALTER UND EINEM MIKROSCHALTER, SOWIE GASGERÄT
ROBINET À TOURNANT DOTÉ D'UN COMMUTATEUR D'AMORTISSEMENT ET D'UN MICRO-INTERRUPTEUR, ET APPAREIL À GAZ

(30) Priority: 19.06.2020 CN 202010571823
(43) Date of publication of application: 17.08.2022
(73) Proprietor: Foshan Shunde Midea Washing Appliances Manufacturing Co., Ltd., Foshan, Guangdong 528311 (CN)
(72) Inventor: ZHANG, Yibin, Foshan, Guangdong 528311 (CN); QI, Zhengsheng, Foshan, Guangdong 528311 (CN); ZHANG, Bingwei, Foshan, Guangdong 528311 (CN)
(74) Representative: RGTH
(86) International application number: PCT/CN2021/086865
(87) International publication number: WO 2021/253949

(56) References cited:
- EP-B1- 3 087 320
- WO-A1-2015/097119
- WO-A1-2018/121951
- CN-A- 106 091 032
- CN-A- 109 237 065
- CN-A- 109 237 065
- CN-B- 106 091 032
- CN-U- 204 239 790
- CN-U- 212 318 857
- CN-U- 212 318 947
- CN-U- 212 318 947

## Description

### FIELD

The present invention relates to the field of gas stoves, in particular to a plug valve using a damper switch and a gas stove using the plug valve.

### BACKGROUND

In some designs of gas stoves, most of the plug valves adopt stepless adjustment. When users use the plug valve to control the firepower, they often bend to observe the flame and judge the firepower, thus the adjustment of the firepower is troublesome.

CN 106 091 032 B, on which the two-part-form of claim 1 is based, provides a gas cooker switch that can be adjusted in multiple stages, wherein the gas cooker switch comprising a switch rotary rod for adjusting the intake air amount and a multi-segment adjuster cooperating with the switch rotary rod. In particular, the multi-segment adjuster comprises an adjusting disc having multiple tooth grooves at the circumferential edge thereof, and an elastic component being a spring piece having an elastic piece tooth that can fit into each of the multiple tooth grooves of the adjusting disc. The adjusting disc is connected to the switch rotatory rod and rotate together with the switch rotatory rod.

The cooking appliance in WO 2015/097119 A 1 comprises a shaft connected to a button for adjusting the amount of gas to be supplied, a follower extending radially towards the shaft, and a tactile feedback device with a guiding section which guides the follower in order to provide adjustment with perception of gas adjustment when rotating the button, and therefore the shaft.

WO 2018/121951 A 1 provides a cooker device comprising a panel, a gas control unit behind the panel, a shaft connected to the gas control unit in order to control the gas control unit, wherein protrusions with heights decreasing in a clockwise direction being provided on the shaft, and wherein the protrusions excite a tab provided on the panel, thereby changing an amount of gas leaving the gas control unit.

CN 109 237 065 A depicts a gas plug valve comprising a micro-switch, that the gas plug valve is simple in construction and more reliable.

### SUMMARY

The main purpose is to provide a plug valve to adjust a firepower in the gas stove more simply and conveniently.

In order to achieve the above purpose, the plug valve comprises a valve body, a valve rod and a damper switch, the damper switch comprises:
a housing provided with a through hole extending through a thickness direction of the housing and a mounting part fixedly mounting the damper switch as a whole on an exterior of the plug valve; and
a rotation member housed in the housing and is rotatable relative to the housing, the rotation member being provided with a shaft hole corresponding and communicating with the through hole, and the valve rod passing through the shaft hole for mounting;
one of the rotation member and the housing is provided with a plurality of positioning grooves arranged at intervals along a rotation direction of the valve rod, and the other one of the rotation member and the housing is provided with an elastic abutting assembly. In a process of the valve rod driving the rotation member to rotate, the elastic abutting assembly fits into one of the plurality of positioning grooves. According to the present invention, the plug valve further comprises a microswitch detachably connected to the valve body, and the microswitch is fixed to the damper switch and the valve body through a connecting member.

The mounting part is provided in the damper switch to fix it to an outside of the plug valve, and the damper switch is provided with a plurality of positioning grooves and an elastic abutting assembly fitting into one of the plurality of positioning grooves. In the process of the adjustment of the firepower by the rotation of the valve rod, the plug valve can realize the accurate control and adjustment of firepower of multiple gears through the clamping and cooperation of the elastic abutting assembly and the positioning groove. Thus, the process of adjusting the firepower of the gas appliance is simple. Furthermore, not only does the plug valve have a safe starting mechanism thanks to the microswitch, but also a compact and efficient design where the microswitch, damper switch and the valve body are fixed by one single connecting member.

In one embodiment, the housing is provided with the elastic abutting assembly, and a periphery of the rotation member is provided with the plurality of positioning grooves, wherein the elastic abutting assembly comprises an elastic member and an abutting member, one end of the elastic member abutting against the housing, the other end of the elastic member abutting against the abutting member, wherein the elastic member provides elasticity to drive the abutting member to abut against a groove wall of each of the positioning grooves and a prompt sound is generated.

In one embodiment, the housing is provided with an extension part outward extended, a mounting groove being provided inside the extension part, wherein one end of the elastic member extends into the mounting groove, and the other end of the elastic member extends from the mounting groove and abuts against the abutting member.

In one embodiment, a side of the abutting member facing the rotation member has an arc contact surface, and an opening of each of the positioning grooves has a shape that fits with an outer contour shape of the abutting member.

In one embodiment, the mounting part is a connecting bracket extending along a side of the housing, the connecting bracket fixedly connecting to the plug valve.

In one embodiment, the rotation member comprises a body part with the plurality of positioning grooves arranged at an interval on a periphery of the body part and a positioning column connected to the body part and extending along a side of the body part, the positioning column and the body part being penetrated by the shaft hole, wherein the housing is also provided with a positioning cylinder extending outward from a periphery of the through hole, the positioning column fitting with a shaft hole of the positioning cylinder.

In one embodiment, the housing comprises a base and a cover detachably connected to the base; the base and the cover being penetrated by the through hole; the cover comprising a cover body provided with the through hole and the positioning cylinder connected to the cover body, and the positioning cylinder extending from the periphery of the through hole to an exterior of the cover body.

According to the invention, the plug valve includes:
a valve body;
a valve rod partially extending into the valve body and rotatable relative to the valve body; and
a damper switch according to any one of embodiments provided outside the valve body, wherein the valve rod passes through the shaft hole in the damper switch.

In one embodiment, the valve body is provided with a locking hole, and the mounting part is provided with a connecting hole, wherein the microswitch is provided with a mounting hole aligning with the connecting hole and the locking hole, wherein the damper switch, the microswitch and the valve body are fixed together through the connecting member passing through the connecting hole and the mounting hole and being locked in the locking hole.

In one embodiment, a limit groove is also provided in an exterior of the valve body, and the microswitch is embedded in the limit groove.

In one embodiment, an upper part of the valve body is provided with a connecting cylinder extending upwards, the valve rod extending through the connecting cylinder and into the valve body, the connecting cylinder being provided with a notch passing through the connecting cylinder in a radial direction of the connecting cylinder, and the microswitch extending through the notch to contact with the valve rod.

In one embodiment, a bottom of the housing is provided with an annular groove surrounding the through hole, an inner wall of the annular groove being radially and convexly provided with a positioning boss, an end of the connecting cylinder being embedded in the annular groove, and the positioning boss fitting into the notch.

The invention also provides a gas stove comprising a burner and a plug valve according to the invention.

### BRIEF DESCRIPTION OF THE DRAWINGS

In order to more clearly explain the the invention and the related art, the following will briefly introduce the drawings used in the embodiments or the description of the related art.
FIG. 1 is a three-dimensional structural view of an embodiment of the plug valve;
FIG. 2 is a sectional view of the plug valve in FIG. 1;
FIG. 3 is a structural view of a valve seat of the plug valve in FIG. 1;
FIG. 4 is a structural view of a valve rod of the plug valve in FIG. 1
FIG. 5 is a schematic view of an exploded structure of the valve rod and a valve core of the plug valve in FIG. 1;
FIG. 6 is a schematic view of an internal structure of a valve cover of the plug valve in FIG. 1;
FIG. 7 is a front view of an embodiment of the valve core;
FIG. 8 is a perspective view of the valve core of FIG. 7;
FIG. 9 is a sectional view of the valve core of FIG. 8;
FIG. 10 is another perspective view of the valve core of FIG. 7;
FIG. 11 is an exploded structural view of the damper switch in the plug valve in FIG. 12;
FIG. 12 is a schematic view of an internal structure of the damper switch in FIG. 11;
FIG. 13 is an assembly view of a base body in the damper switch and the valve cover in the valve body of the plug valve in FIG. 1;
FIG. 14 is a three-dimensional structural view of the valve cover of the plug valve in FIG. 1;
FIG. 15 is a top view of the base body in the damper switch of the plug valve of FIG. 1;
FIG. 16 is an exploded view of the base body in the damper switch and the valve cover in the valve body and the microswitch of the plug valve in FIG. 1;
FIG. 17 is an assembly view of the valve cover in the valve body and a microswitch of the plug valve in FIG. 1;
FIGS. 18a to 18j are schematic views showing a process of rotating the valve core in the plug valve from 0 degree to 270 degrees, taken at a position where a second air outlet channel locates;
FIGS. 19a to 19j are schematic views showing the process of rotating the valve core in the plug valve from 0 degree to 270 degrees, taken at a position where a first air outlet channel locates.

The realization of the purpose, functional features and advantages will be further described with reference to the attached drawings in combination with the embodiments.

### DETAILED DESCRIPTION OF THE EMBODIMENTS

Embodiments will be clearly and completely described below in combination with the accompanying drawings.

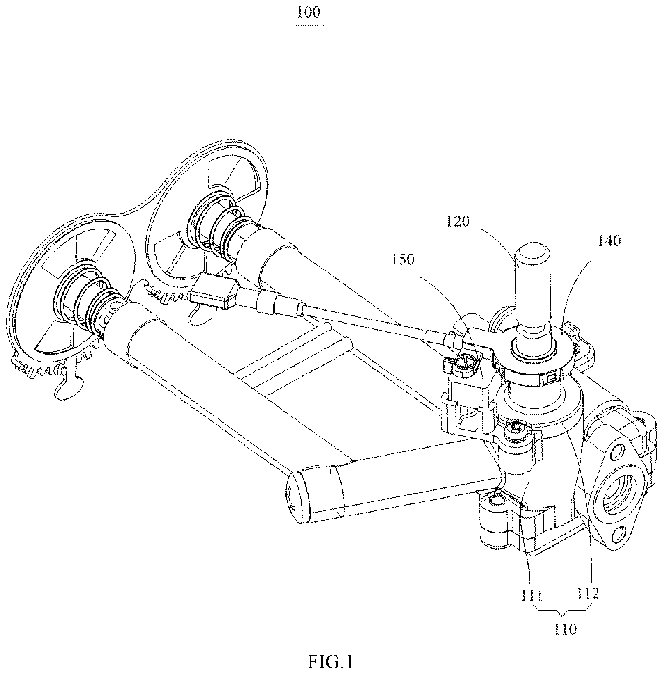

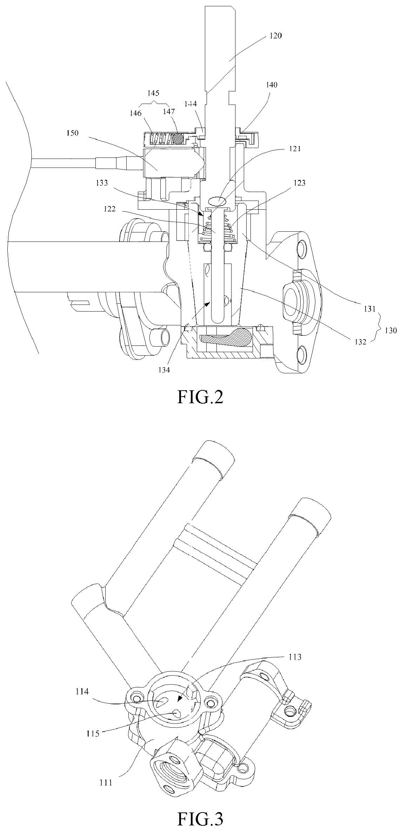

Referring to FIG. 1 and FIG. 2, the invention provides a plug valve 100, applied on a gas appliance, according to the invention on a gas stove, or in other words, the gas appliance includes a plug valve 100. The gas appliance also includes a burner connected to the plug valve 100. The gas appliance can control the firepower of the burner according to the plug valve 100 to meet different combustion requirements. The firepower of the burner can be controlled through the plug valve 100 to meet the needs of cooking different ingredients.

For ease of description, the up and down directions indicated in the following texts refer to the up and down directions of the valve core 130 in the figures.

Referring to FIGS. 1 to 3, the plug valve 100 according to the invention includes a valve body 110, a valve rod 120, a valve core 130, a damper switch 140 and a microswitch 150. The valve core 130 is provided in the valve body 110 and rotatable in the valve body 110. The valve rod 120 extends into the valve body 110 and connected to an upper part of the valve core 130. The damper switch 140 is fixed on an exterior of the valve body 110 and sleeved outside the valve rod 120. It can be understood that in the actual product, an upper end of the valve rod 120 can also be provided with a knob. When in use, the user manually operates the knob to drive the valve rod 120 and the valve core 130 to rotate, which controls the gas flow from the plug valve 100 and realize the firepower regulation.

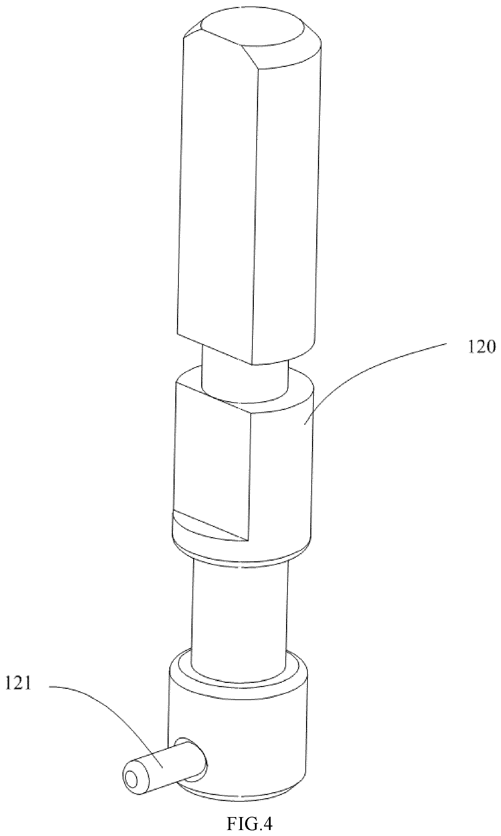

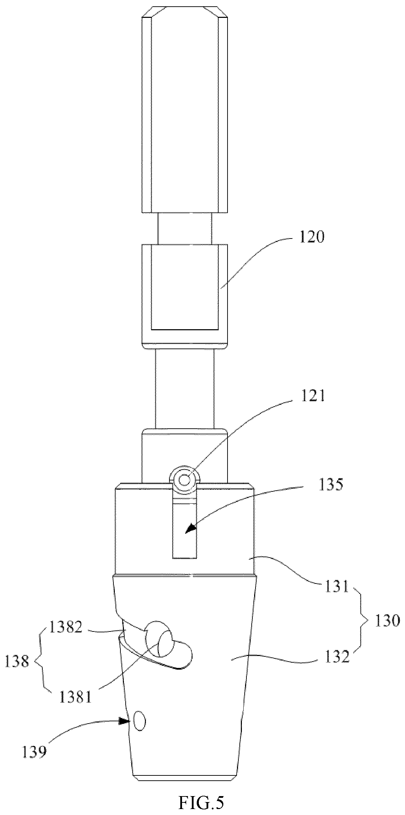

Referring to FIGS. 4 to 6, the valve body 110 is a main structure of the plug valve 100, and other parts of the plug valve 100 can be mounted on the valve body 110, therefore, the plug valve 100 can meet different functions. The valve body 110 can be made of copper or other materials through casting and other processes. In order to meet the mounting requirements of different components, the valve body 110 is generally irregular. The valve body 110 mainly includes a valve seat 111 and a valve cover 112. The valve cover 112 and the valve seat 111 are fitted with each other to form a containing cavity 113. The valve seat 111 is also provided with an inner side air supply hole 115 and an outer side air supply hole 114 on a side wall of the containing cavity 113 (see FIG. 3). The inner side air supply hole 115 is communicated with an inner side nozzle of the burner through a pipe, and the outer side air supply hole 114 is communicated with an outer side nozzle of the burner through a pipe. An upper part of the valve cover 112 is provided with an insertion hole for mounting the valve rod 120, the insertion hole is communicated with the containing cavity 113, and a lower end of the valve rod 120 can be inserted into the containing cavity 113 through the insertion hole and connected to the valve core 130.

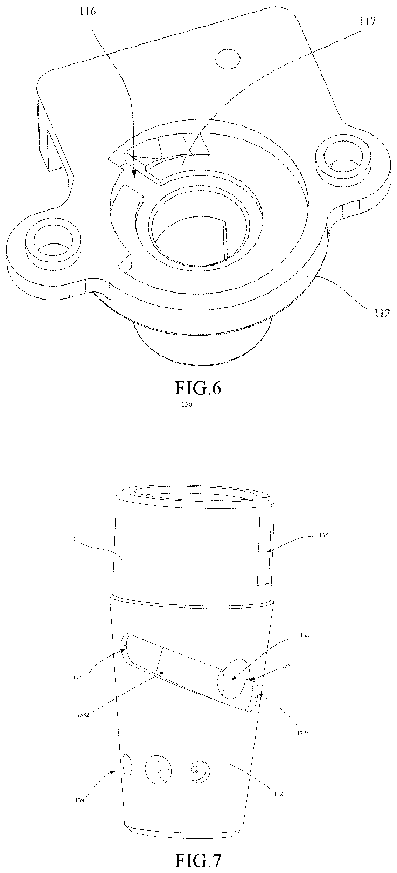

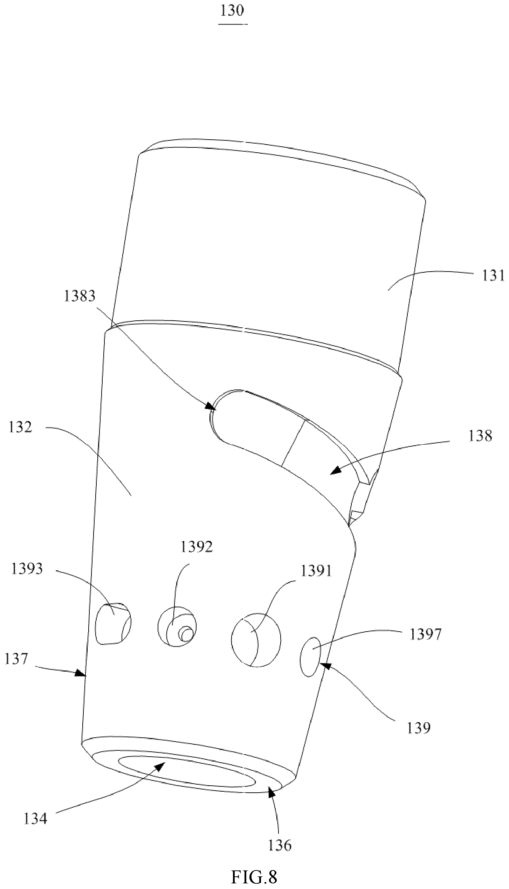

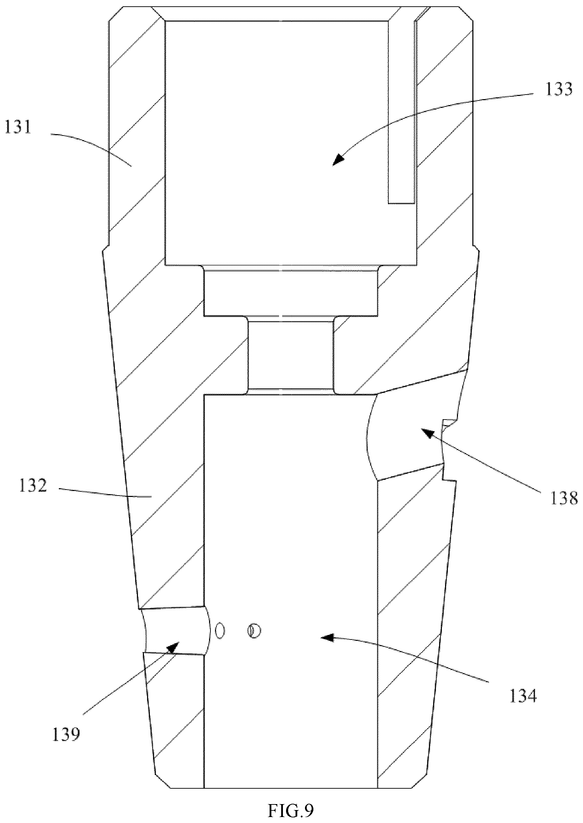

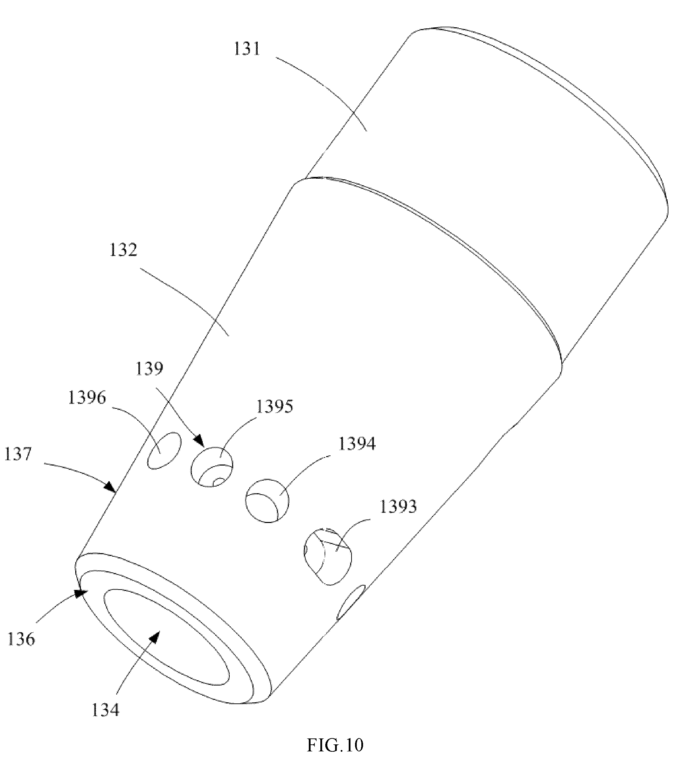

Referring to FIGS. 7 to 10, the valve core 130 is an irregular conical body. The valve core 130 includes two sections. In some embodiments, a connecting section 131 at an upper part of the valve core 130 and an air supply section 132 at a lower part of the valve core 130. The connecting section 131 is provided with a mounting cavity 133 with an upward opening, the air supply section 132 is provided with an air inlet channel 134 with an downward opening, a side wall of the connecting section 131 is also provided with a clamping groove 135 passing through the side wall, and a lower side wall of the valve rod 120 is connected to a clamping pin 121. A lower end of the valve rod 120 is also connected to a guide rod 122. The guide rod 122 extends downward into an air inlet channel 134 through the mounting cavity 133. A spring 123 is sleeved on the guide rod 122. The spring 123 is located in the mounting cavity 133, and always provides an upward elastic force. Further, an inner wall of the valve cover 112 is provided with a child lock groove 116 with a downward opening and an annular sliding table 117 extended from both sides of the child lock groove 116. When the plug valve 100 is in a closed state, an opening of the child lock groove 116 aligns with the clamping groove 135 of the valve core 130 in the up and down direction. Because the spring 123 always provides the upward elastic force, when the plug valve 100 is in a closed position, the valve rod 120 is pushed upward by the spring 123 and the clamping pin 121 is inserted in the child lock groove 116. When the plug valve 100 is to be started, the user presses the valve rod 120 through the knob to make the clamping pin 121 slide and fit in the clamping groove 135 of the valve core 130, the user then applies a horizontal force to make the valve rod 120 slide along the annular sliding table 117 through the clamping pin 121, and then toggle the valve core 130 to rotate, that is, through the above structure, the plug valve 100 requires the user to apply two actions: downward pressing and horizontal rotation during starting the plug valve, which can avoid the gas leakage caused by the user touching the knob by mistake. Further, in some embodiments, a width of the clamping groove 135 is 2.2 mm. A diameter of the clamping pin 121 is 2.0 mm, thus, the two can cooperate closely with each other and have almost no virtual position, which is more sensitive when driving the valve core 130 to rotate clockwise or counterclockwise.

The air supply section 132 includes a bottom surface 136 and a side surface 137. The side surface 137 is a conical surface with a large upper radius. The air supply section 132 of the containing cavity 113 of the valve body 110 is also provided with a first air outlet channel 138 connected to the air inlet channel 134 and a second air outlet channel 139 connected to the air inlet channel 134. The air inlet channel 134 extends from the bottom surface 136 to the valve core 130, and the first air outlet channel 138 is recessed from the side surface 137 into the valve core 130. The first air outlet channel 138 extends spirally along a periphery of the valve core 130, the second air outlet channel 139 is recessed from the side surface 137 into the valve core 130 and is spaced from the first air outlet channel 138 along an axial direction of the valve core 130. The second air outlet channel 139 includes a plurality of air outlet holes with different apertures and spaced from each other on the periphery of the valve core 130, that is, during use, the user rotates the knob to rotate the valve core 130. Because the first air outlet channel 138 extends spirally, the linear change of the communication area between the first air outlet channel 138 and the outer side air supply hole 114 is more obvious. It is more obvious that the plug valve 100 controls the outer side flame of the burner. The user can obviously see the flame change of the burner. Because the second air outlet channel 139 includes a plurality of air outlet holes with different apertures and spaced from each other on the periphery of the valve core 130, the inner side flame of the burner can also be adjusted to meet users' variety of needs for cooking.

In some embodiments, the central axis of the air inlet channel 134 can be linear or curved. In this embodiment, the central axis of the air inlet channel 134 is linear, and cross-sectional areas of the air inlet channel 134 are equal. The depth direction of the air inlet passage 134 extends along the axial direction of the valve core 130. Of course, in other embodiments, the cross-sectional areas of the air inlet channel 134 can be variable.

The first air outlet channel 138 is recessed from the side surface 137 into the valve core 130. Therefore, it can be understood that a depth direction of the first air outlet channel 138 is a radial direction of the valve core 130. The first air outlet channel 138 may be formed by a machining process.

It should be noted that the first air outlet channel 138 extends spirally along the periphery of the valve core 130, which means that a contour of the first air outlet channel 138 on the side surface 137 extends spirally along the periphery of the valve core 130. At this time, a projection of the first air outlet channel 138 on an assumed plane passing a central axis of the valve core 130 is inclined.

Referring again to FIG. 7, regarding the first air outlet channel 138, in some embodiments, the first air outlet channel 138 includes a first groove 1382 and a first through hole 1381. The first groove 1382 is provided on the side surface 137. The first through hole 1381 is communicated with the air inlet channel 134 and the first groove 1382. The first groove 1382 extends spirally along the periphery of the valve core 130.

Thus, when the first groove 1382 is communicated with the outer side air supply hole 114, the gas in the air inlet channel 134 can flow into the outer side air supply hole 114 through the first through hole 1381 and the first groove 1382 to control the gas. In addition, the first groove 1382 is separated from the air inlet channel 134 along a radial direction of the valve core 130. The gas can only flow into the first groove 1382 through the first through hole 1381. Since the first groove 1382 is spirally arranged on the side surface 132 of the valve core 130, the area of the first groove 1382 overlapping with the outer side air supply hole 114 at different positions changes to adjust the gas flow and realize a linear adjustment of the gas.

In the embodiment, when the first through hole 1381 is aligned with the outer side air supply hole 114, the communication area between the first air outlet channel 138 and the outer side air supply hole 114 is the largest, and the gas passes through the first through hole 1381 and directly enters the outer side air supply hole 114. During a rotation of the valve core 130, the first groove 1382 is gradually communicated with the outer side air supply hole 114. At this time, because the first groove 1382 is spiral, the communication area between the first air outlet channel 138 and the outer side air supply hole 114 becomes smaller, and a path of the gas from the inlet channel 134 to the outer side air supply hole 114 becomes longer and a resistance becomes larger, making the reduction of the gas flow more obvious, and improving a flame linear adjustment of the burner corresponding to the first air outlet channel 138. It can be understood that the first through hole 1381 is communicated in the radial direction of the valve core 130.

In some embodiments, along a length direction of the first groove 1382, the first groove 1382 includes a first end 1383 and a second end 1384 opposite to the first end 1383. The first through hole 1381 is located between the first end 1383 and the second end 1384.

As discussed above, when the first through hole 1381 is aligned with the outer side air supply hole 114, the communication area between the first air outlet channel 138 and the outer side air supply hole 114 is the largest, and the gas flow through the first air outlet channel 138 is also the largest. The farther a position of the first groove 1382 from the first through hole 1381, the smaller the gas flow.

In this embodiment, the first through hole 1381 is located between the first end 1383 and the second end 1384. During an ignition of the burner, the communication area between the first air outlet channel 138 and the outer side air supply hole 114 gradually increases with the rotation of the valve core 130, and the gas flow of the plug valve 100 can change linearly to the maximum gas flow, to prevent the danger caused by deflagration of the burner.

Further, a spiral length along the side surface 137 of the valve core 130 is greater than a spiral length of the second end 1384 and the first through hole 1381 along the side surface 137 of the valve core 130. In the embodiment, during the ignition of the burner, the valve core 130 rotates counterclockwise, and the second end 1384 is first communicated with the outer side air supply hole 114. With the rotation of the valve core 130, the first through hole 1381 and the second end 1384 are successively communicated with the outer side air supply hole 114. A spiral length between the first end 1383 and the first through hole 1381 is long. After the burner is ignited, with the rotation of the valve core 130, the adjustment range of the gas flow from the outer side air supply hole 114 is larger, which is conducive to the linear adjustment the flame of the burner.

Further, along a direction from the first end 1383 to the second end 1384, the first groove 1382 extends spirally to the bottom surface 136. On the contrary, along a direction from the second end 1384 to the first end 1383, the first groove 1382 extends spirally upward. Thus, the first groove 1382 can make full use of the upper position of the air supply section 132 of the valve core 130, which is conducive to the formation of the first groove 1382.

As for the second air outlet channel 139, it can be seen from the above contents that the second air outlet channel 139 is recessed from the side surface 137 into the valve core 130 and is spaced from the first air outlet channel 138 along the axial direction of the valve core 130. The second air outlet channel 139 includes a plurality of air outlet holes with different apertures and spaced from each other on the periphery of the valve core 130. During the rotation of the valve core 130, the inner side air supply hole 115 is also docked with the air outlet holes with different apertures in the second air outlet channel 139 to adjust the inner side flame. It can be understood that the inner side flame generally corresponds to a center of the pot, and the inner side flame is adjusted to meet the different requirements for cooking.

In the embodiment, as illustrate in FIGS. 7 to 10, along the axial direction of the valve core 130, the first air outlet channel 138 and the second air outlet channel 139 are distributed along the up and down direction. In an embodiment the first air outlet channel 138 is located above the second air outlet channel 139. Further, in the rotation direction from a closed state to a starting state of the plug valve 100, the shortest distance between the inner side air supply hole 115 and the second air outlet channel 139 along the side surface 137 of the valve core 130 is less than the shortest distance between the outer side air supply hole 114 and the first air outlet channel 138 along the side surface 137 of the valve core 130. The shortest distance between the inner side air supply hole 115 and the second air outlet channel 139 is a spiral length of a first air supply hole in the second air outlet channel 139 and the inner side air supply hole 115 in the periphery of the valve core 130 in the starting rotation direction. In this way, in the process of rotating the valve core 130 through the knob and valve rod 120 for fire adjustment, due to a small spiral length of the second air outlet channel 139 and the inner side air supply hole 115 on the periphery of the valve core 115, the inner side air supply hole 115 is then first communicated with the second air outlet channel 139 to realize air supply. During the ignition, the inner side nozzle of the burner first ejects gas for combustion to form the inner side flame. When the valve core 130 is further rotated, the outer side air supply hole 114 is also communicated with the first air outlet channel 138, the outer side nozzle also ejects gas which is ignited by the inner side flame. During ignition of the burner, it is a process of starting with the inner side flame then producing the outer side flame and starting with a small frame and then producing a large frame, as so to avoid deflagration of the burner when ignition. In some embodiments, in the structure of the second air outlet channel 139, the air outlet hole includes an ignition hole 1397 arranged in a first position in the rotation direction, that is, the shortest distance between the second air outlet channel 139 and the inner side air supply hole 115 is a spiral length of the ignition hole 1397 and the inner side air supply hole 115 on the periphery of the valve core 115. During the ignition of the plug valve 100, the inner side air supply hole 115 is docked with the ignition hole 1397 firstly to realize the jet ignition of the inner side nozzle of the burner, when the valve core 130 rotates further, the outer side air supply hole 114 is docked and communicated with the second end of the first air outlet channel 138 at the same time. Since an aperture of the ignition hole 1397 can be designed to be relatively small, the structure makes the ignition process not cause deflagration, and the ignition process is smooth and safe.

In some embodiments, the projection of the first air outlet channel 138 overlaps partially with that of the second air outlet channel 139 along the axial direction of the valve core 130, and a center angle of the projection of the first air outlet channel 138 on the bottom surface 136 is less than that of the projection of the second air outlet channel 139 on the bottom surface 136. In this way, the projection of the first air outlet channel 138 overlaps partially with the second air outlet channel 139. The arrangement of the first air outlet channel 138 and the second air outlet channel 139 on the valve core 130 is relatively compact. If the center angle of the projection of the first air outlet channel 138 on the bottom surface 136 is smaller than that of the projection of the second air outlet channel 139 on the bottom surface 136, after the first air outlet channel 138 and the outer side air supply hole 114 are staggered during the rotation of the valve core 130, it is realized that when the outer side gas supply is closed, the outer side flame is turned off, and the second air outlet channel 139 has a certain adjustment space. When the outer side flame is turned off, the inner side flame can also be adjusted to meet the different firepower needs of users for cooking.

In some embodiments, referring to FIG. 7 to FIG. 10 again, in the rotation stroke from the first through hole 1381 to the first end 1383, the air outlet hole at least includes the first air outlet hole 1391, the second air outlet hole 1392 and the third air outlet hole 1393 arranged in sequence. The aperture of the second air outlet hole 1392 is smaller than the aperture of the first air outlet hole 1391, and the aperture of the third air outlet hole 1393 is smaller than the aperture of the second air outlet hole 1392. In combination with the above contents, when the plug valve 100 is started, the valve core 130 rotates counterclockwise. The outer side air supply hole 114 slides in a direction from the second end 1384, to the first through hole 1381 and then to the first end 1383 relative to the first air outlet channel 138. During the counterclockwise rotation of the valve core 130, the outer side flame is the largest when the outer side air supply hole 114 is docked with the first through hole 1381. When the outer side air supply hole 114 is moved from the first through hole 1381 to the first end, the communication area (hatched part) between the outer side air supply hole 114 and the first air outlet channel 138 is gradually decreased. Thus, the outflow of the gas can be controlled to gradually decrease. At this time, the outer side flame of the burner is gradually decreased. The apertures of the first air outlet 1391, the second air outlet 1392 and the third air outlet 1393 of the second air outlet channel 139 are set to be decremented in turn. The inner side flame and the outer side flame show the same decreasing trend, therefore, the flames on the burner can be adjusted to meet the cooking needs of users.

Further, the air outlet hole also includes a fourth air outlet hole 1394, a fifth air outlet hole 1395 and a sixth air outlet hole 1396 arranged in sequence. The fourth air outlet hole 1394, the fifth air outlet hole 1395 and the sixth air outlet hole 1396 are located behind the third air outlet hole 1393 in the rotation direction, and the apertures of the fourth air outlet hole 1394, the fifth air outlet hole 1395 and the sixth air outlet hole 1396 form an incremented or decremented trend. In some embodiments, the apertures of the fourth air outlet hole 1394, the fifth air outlet hole 1395 and the sixth air outlet hole 1396 form a decremented trend, the aperture of the fourth air outlet hole 1394 is equivalent to that of the first air outlet hole 1391. When the inner side air supply hole 115 is communicated with the fourth air outlet hole 1394, the inner side flame on the burner is the largest. Combined with the above contents, through this design, when people cook such as fried eggs and pancakes, only the inner side flame is needed for heating, through the structure, the user can adjust the inner side flame through the fourth air outlet hole 1394, the fifth air outlet hole 1395 and the sixth air outlet hole 1396 as different gears when the outer side flame is turned off, to meet people's demand for fine control of the flame in the cooking process.

It can be understood that in the above content, although a scheme that three air outlet holes are set in the rotation stroke from the first through hole 1381 to the first end and three air outlet holes are set behind the second air outlet hole 1392 is listed. There can be other number of air outlet holes, such as more dense air outlet holes are set to achieve finer adjustment of the inner side flame.

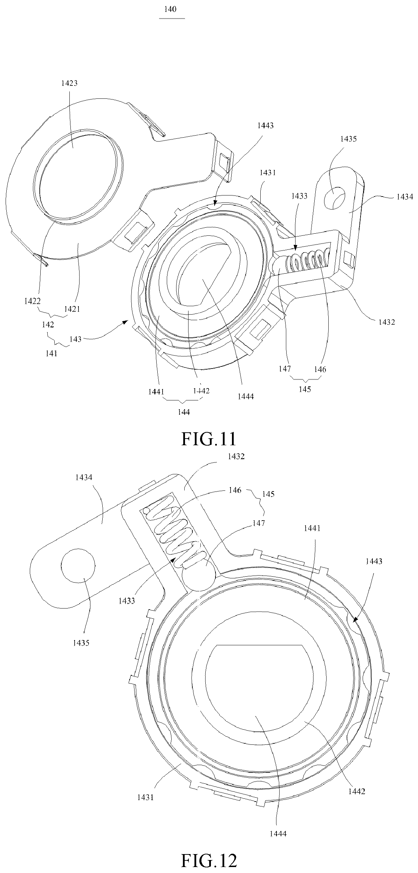

In order to facilitate the user to adjust the inner side flame and outer side flame during use, as illustrated in FIGS. 1 and 2 and FIGS. 11 and 12, some embodiments improve the structure of the damper switch 140 of the plug valve 100 and propose a damper switch 140 with innovative design. In some embodiments, the damper switch 140 includes a housing 141 and a rotation member 144, and the housing 141 is provided with a through hole 1423 extending through a thickness direction of the housing. The housing 141 is also provided with a mounting part that can fix the whole damper switch 140 on an exterior of the plug valve 100. The damper switch 140 is detachably connected to the valve cover 112 of the valve body 110 through the mounting part. The rotation member 144 is housed in the housing 141 and rotatable relative to the housing 141. The rotation member 144 is provided with a shaft hole 1444, which is correspondingly communicated with the through hole 1423. The valve rod 120 passing through the shaft hole 1444 for mounting, and the rotation member 144 is linked with the valve rod 120. One of the rotation member 144 and the housing 141 is provided with a plurality of positioning grooves 1443 arranged at intervals in the rotation direction of the valve rod 120, and the other one of the rotation member 144 and the housing 141 is provided with an elastic abutting assembly 145. In a process of the valve rod 120 driving the rotation member 144, the elastic abutting assembly 145 fits into one of the plurality of positioning grooves 1443. Further, the elastic abutting assembly 145 fits into a positioning groove 1443 during the rotation of the valve core 130 when the inner side air supply hole 115 is docked with the air outlet hole in the second air outlet channel 139, to maintain a docking state between the inner side air supply hole 115 and the air outlet hole in the second air outlet channel 139, that is, at least the positioning groove 1443 is corresponding to the air outlet hole in the second air outlet channel 139. Of course, the number of positioning grooves 1443 can be larger than the number of air outlet holes, that is, the damper switch 140 fits with the above valve core 130, the precise gear adjustment of the inner side flame and the outer side flame is realized, and the fire adjustment is convenient. Of course, when the second outlet channel 139 is linearly adjusted similar to the first air outlet channel 138, the damper switch 140 also adopts the gear adjustment mode to realize the convenience of the adjustment of the inner side flame and the outer side flame at the same time.

The damper switch 140 is arranged in the plug valve 100, the damper switch 140 is provided with a plurality of positioning grooves 1443 and an elastic abutting assembly 145 which can fit into one of the plurality of positioning grooves 1443. During the rotation of the valve rod 120 to adjust the firepower, the plug valve 100 can realize the accurate control to adjust the firepower of multiple gears through the clamping and matching of the elastic abutting assembly 145 and the positioning groove 1443. The adjustment of the firepower of the gas appliance is simple, and the damper switch 140 is also provided outside the valve body 110. When the plug valve 100 is used for a long time, the debris generated by the damper switch 140 will not fall into the valve body 110, which avoids the adverse impact of the damper switch 140 on the air tightness of the valve body 110. Moreover, the damper switch 140 is provided outside the valve body 110, which also improves the convenience of disassembly and assembly of the damper switch 140.

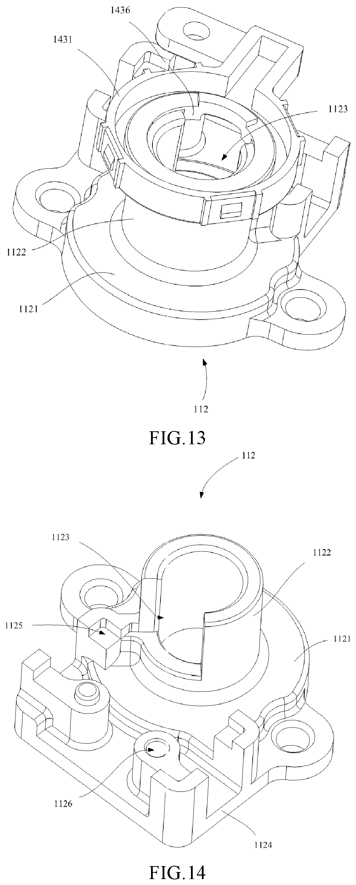

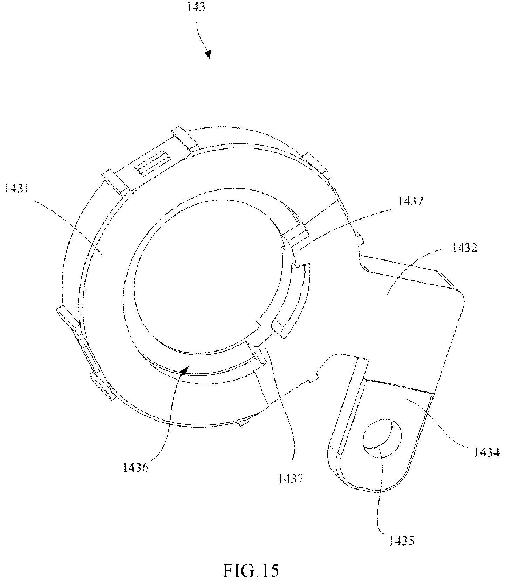

The damper switch 140 is provided outside the valve body 110. In order to facilitate the fixed mounting of the damper switch 140, as illustrated in FIGS. 13 to 15, FIG. 13 is the assembly drawing of the base body 1431 and the valve cover 112 in the damper switch 140. The above mounting part is a connecting bracket 1434 which extends from one side of the base body 1431 in the housing 141, and the connecting bracket 1434 is configured for fixed connection to the valve body 110 of the plug valve 100.

A plurality of positioning grooves 1443 are provided on the rotation member 144, and the elastic abutting assembly 145 is provided on the housing 141. In some embodiments, the elastic abutting assembly 145 includes an elastic member 146 and an abutting member 147. One end of the elastic member 146 abuts against the housing 141 and the other end abuts against the abutting member 147. A plurality of positioning grooves 1443 are arranged at intervals on the periphery of the rotation member 144. The elastic member 146 provides elastic force to drive the abutting member 147 to abut against the groove wall of the positioning groove 1443 and a prompt sound is given. The rotation member 144 can be made of metal, and the abutting member 147 can also be made of metal. Driven by the elastic member 146, the abutting member 147 collides the groove wall of the positioning groove 1443 to produce a prompt sound. In the process of fire adjustment, the user can get whether the fire is effectively adjusted in combination with the prompt sound.

The housing 141includes a base 143 and a cover 142 adapted to the base 143. The cover 142 can be detachably connected to the base 143 by a snap. The base 143 includes a base body 1431 and an extension part 1432. The extension part 1432 extends outward from an edge of the base body 1431, the rotation member 144 is housed in the base body 1431, a mounting groove 1433 is provided in the extension part 1432, and the elastic member 146 extends into the mounting groove 1433. One end of the elastic member 146 extends into the mounting groove 1433, and the other end extends from the mounting groove 1433 and abuts against the abutting member 147. In this embodiment, the elastic member 146 is a spring, and the spring is limited by the mounting groove 1433, which can ensure the stability of the structure. Of course, in other embodiments, the elastic member 146 may also be an elastic piece structure.

Further, in order to ensure smooth movement in the process of rotation adjustment, a side of the abutting member 147 facing the rotation member 144 has an arc contact surface, and an opening shape of the positioning groove 1443 has a shape that fits with an outer contour shape of the abutting member 147. The abutting member 147 shown in the figures is spherical, that is, a steel ball, and the positioning groove 1443 is an open groove with spherical surface. When the abutting member 147 fits into the positioning groove 1443, the positioning groove 1443 can only accommodate a small part of the abutting member 147. In such rotation process, the abutting member 147 is separated from one positioning groove 1443 and enters another adjacent positioning groove 1443 smoothly. It can be understood that in other embodiments, the abutting member 147 can also be such as a locating pin with a spherical head.

Further, in order to ensure that the rotation member 144 rotates more smoothly, some embodiments also make the following improvements: the rotation member 144 includes a body part 1441 with a plurality of positioning grooves 1443 arranged at intervals around the periphery thereof, and a positioning column 1442 connected to the body part 1441 and extended from one side of the body part 1441. The positioning column 1442 and the body part 1441 are penetrated by the shaft hole 1444, and the housing 141 is also provided with a positioning cylinder 1422. In some embodiments, the through hole 1423 extends through the base 143 and the cover 142. The cover 142 includes a cover body 1421 provided with a through hole 1423 and the positioning cylinder 1422 connected to the cover body 1421. The positioning cylinder 1422 extends from the periphery of the through hole 1423 to the outside of the cover body 1421, and the positioning column 1442 fits with the shaft hole of the positioning cylinder 1422. In some embodiments, the positioning column 1442 and the positioning cylinder 1422 are arranged coaxially. Since the cover 142 and the base 143 are relatively fixed, and the valve rod 120 in the plug valve 100 passes through the shaft hole 1444 to drive the rotation member 144 to rotate, the shaft holes of the positioning column 1442 fitting with the positioning cylinder 1422 can ensure that a spacing between an outer periphery of the rotation member 144 and an inner wall of the base 143 is relatively constant. Such an arrangement can ensure that when the abutting member 147 rotates relative to the rotation member 144, it will not be stuck or positioned unstably because the spacing between the outer periphery of the rotation member 144 and the inner wall of the base 143 suddenly becomes smaller or larger, and such an arrangement also brings advantages to the process. In some embodiments, a high matching accuracy of the valve rod 120 and the shaft hole 1444 is not needed, so the cost can also be reduced.

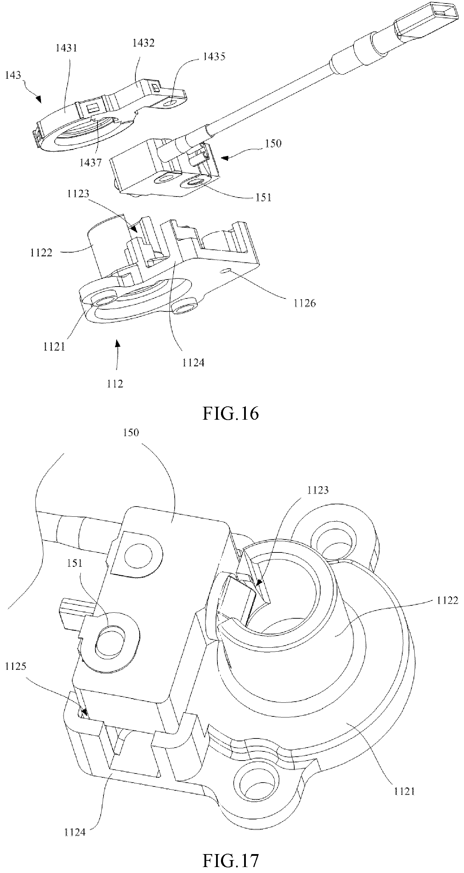

Referring to FIG. 1, FIG. 2, FIG. 15 and FIG. 16, according to the invention, the plug valve 100 also includes a microswitch 150. The microswitch 150 is detachably connected to an exterior of the valve body 110. The detachable connection can be snap connection, pin insertion or screw connection. In order to realize the simplicity of the overall structure and convenient assembly, the microswitch 150 is, in accordance with the invention, fixed with the damper switch 140 and the valve body 110 through a connecting member. The connecting bracket 1434 is provided with a connecting hole 1435, a locking hole 1126 is provided on the valve cover 112 of the valve body 110, the microswitch 150 is provided with a mounting hole 151 aligning with a connecting hole 1435 and the locking hole 1126, and the damper switch 140, the microswitch 150 and the valve body 110 are fixed together through the connecting member passing through the connecting hole 1435 and the mounting hole 151 to be locked in the locking hole 1126. The microswitch 150 is located between the damper switch 140 and the valve body 110. It can be seen from the above contents that the plug valve 100 has a safe starting mechanism. In the starting process, it is necessary to first press the valve rod 120 through the knob, so the microswitch 150 is used to contact with the valve rod 120 for detection during the pressing of the valve rod 120. When the microswitch 150 is triggered during the pressing of the valve rod 120, the microswitch 150 is changed from the normally off to being turned on, and a signal is sent to a pulse controller to discharge, the ignition switch will be ignited. In some embodiments, the valve cover 112 includes a valve cover body 1121 and a connecting cylinder 1122 connected to the valve cover body 1121 and extended upward from the valve cover body. The valve rod 110 extends into the valve body 110 by passing through the connecting cylinder 1122. The connecting cylinder 1122 is provided with a radial through notch 1123. A probe of the microswitch 150 enters into the valve body 110 by passing through the notch 1123 to contact the valve rod 120 for detection, and control the starting of the plug valve 100 by triggering the valve rod 120, realizing the safe starting of plug valve 100. At the same time, that is, through the above connection structure, the plug valve 100 fixes the three together through a simple structure. The overall structure is simplified. Further, in order to improve the stability of the connection structure, as illustrated in FIGS. 14 and 16, the valve cover 112 also includes a lap part 1124 connected to the valve cover body 1121, the locking hole 1126 is opened on the lap part 1124, a plurality of retaining walls are convex on the lap part 1124, the plurality of retaining walls are enclosed to form a limit groove 1125, and the microswitch 150 is embedded in the limit groove 1125. Due to the limit groove 1125, after the damper switch 140 and the microswitch 150 are locked to the valve cover 112 through the connecting member, the three will be not rotatable relatively, and the overall structure is more firm. It can be understood that in the fixing mode of the above damper switch 140 and microswitch 150, the connecting member can also be set as a snap structure, that is, the damper switch 140 and microswitch 150 are fitted and fixed with the valve body 110 as a whole.

Further, in some embodiments, an end of the base body 1431 is provided with an annular groove 1436, and a positioning boss 1437 is convex radially from the annular groove 1436. During an assembly of the damper switch 140, an end of the connecting cylinder 1122 can be embedded in the annular groove 1436, and the positioning boss 1437 fits into the notch 1123. In this way, through a matching of the positioning boss 1437 and the notch 1123, a circumferential movement of the damper switch 140 in the fire adjustment process can be avoided, and the assembly alignment process is simpler.

The damper switch 140 is set for more accurate control in the process of fire adjustment. The positioning groove 1443 in the damper switch 140 is in correspondence with a plurality of air outlet holes in the second air outlet channel 139. Through the damper switch 140, when the inner side air supply hole 115 is communicated with an air outlet hole during the rotation of the valve core 130, the abutting member 147 in the elastic abutting assembly 145 fits into a positioning groove 1443, the abutting member 147 collides with the positioning groove 1443 and a prompt sound is given, and it can ensure that the valve core 130 remains in this position.

The following content will introduce the fire adjustment process of the plug valve 100 in detail to understand an alignment change between the first air outlet channel 138 of the valve core 130 and the outer side air supply hole 114 and an alignment change between the second outlet channel 139 and the inner side air supply hole 115 with the cooperation of the damper switch 140.

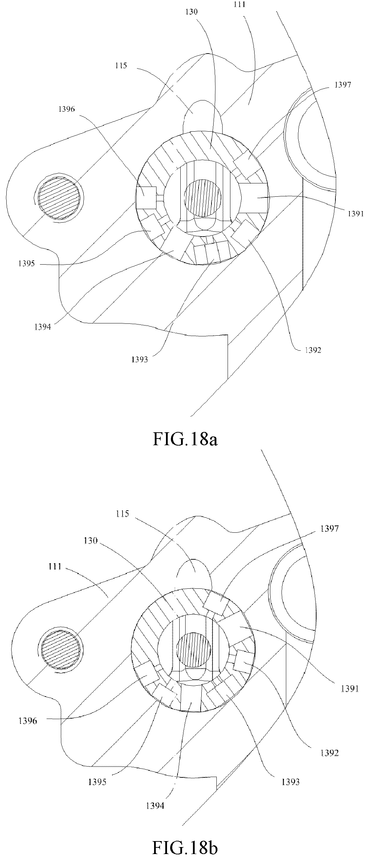

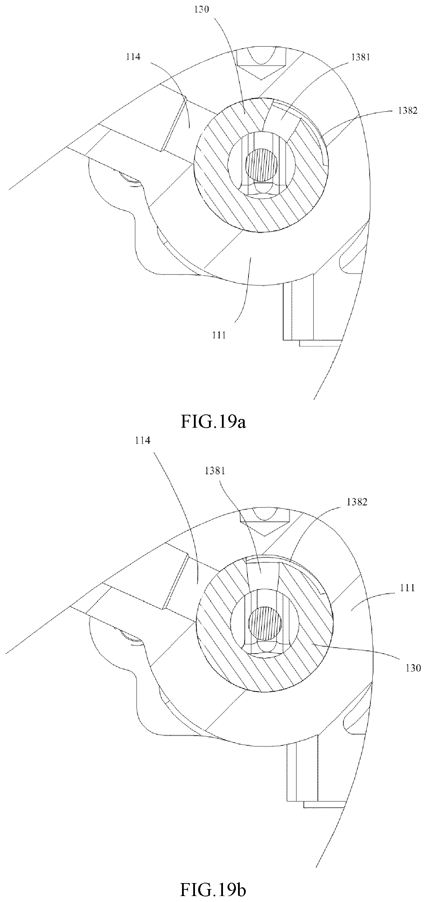

Referring to FIGS. 18a and 19a, in the structure shown in FIGS. 18a and 19a, the valve core 130 is in the position of closing the valve body 110. The first air outlet channel 138 of the valve core 130 is not communicated with the outer side air supply hole 114 of the valve body 110, and the second air outlet channel 139 of the valve core 130 is not communicated with the inner side air supply hole 115 of the valve body 110.

Referring to FIG. 18b and FIG. 19b, in the structure shown in FIG. 18b and FIG. 19b, the valve core 130 rotates 27 degrees. It can be seen that the first air outlet channel 138 of the valve core 130 is not in communication with the outer side air supply hole 114 of the valve body 110, the second air outlet channel 139 of the valve core 130 begins to come to a communication with the inner side air supply hole 115 of the valve body 110, and the gas is ejected from the inner side nozzle of the burner through the air supply hole and ignited by the ignition needle.

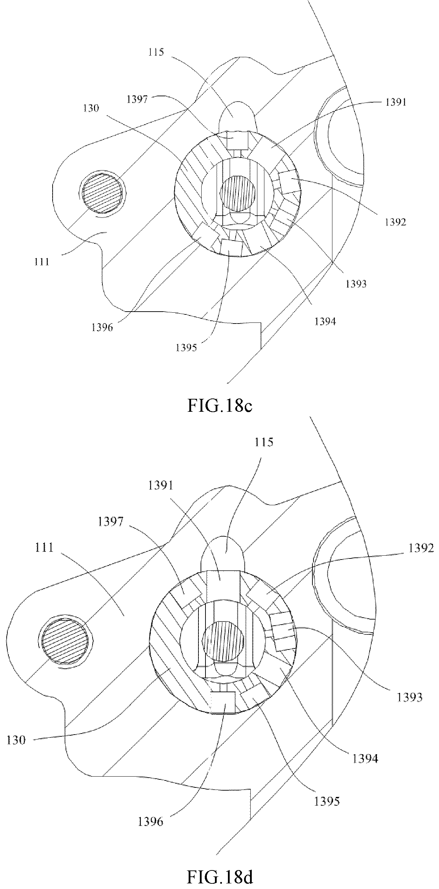

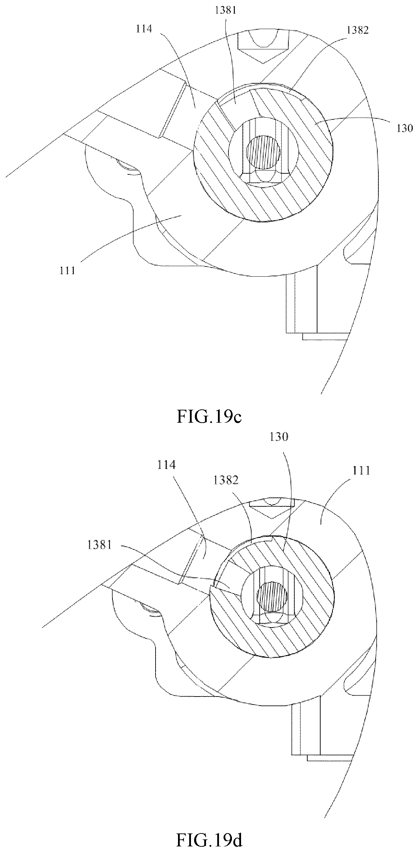

Referring to FIG. 18c and FIG. 19c, in the structure shown in FIG. 18c and FIG. 19c, when the valve core 130 rotates 53 degrees, it can be seen that the first air outlet channel 138 of the valve core 130 begins to communicate with the outer side air supply hole 114 of the valve body 110, an ignition hole 1397 of the second outlet channel 139 of the valve core 130 is fully communicated with the inner side air supply hole 115 of the valve body 110, and the gas is ejected from the outer side nozzle of the burner through the outer side air supply hole 114 and ignited by the inner side flame.

Referring to FIG. 18d and FIG. 19d, in the structure shown in FIG. 18d and FIG. 19d, when the valve core 130 rotates 90 degrees, it can be seen that the first through hole 1381 of the first air outlet channel 138 of the valve core 130 has been fully communicated with the outer side air supply hole 114 of the valve body 110, and the first air outlet 1391 of the second air outlet channel 139 of the valve core 130 has been fully communicated with the inner side air supply hole 115 of the valve body 110. Because the first through hole 1381 and the first air outlet 1391 are holes with larger aperture, the gas flow accessible, as well as the flame in the burner, has currently reached its maximum. In this degree, both the inner ring and the outer ring have high flame.

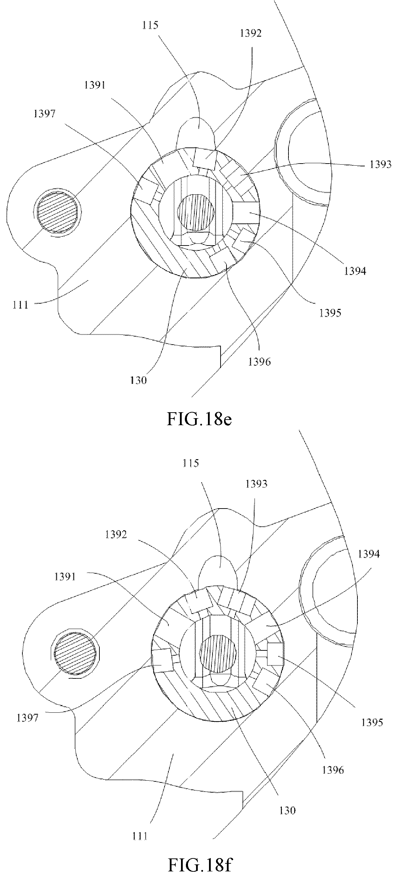

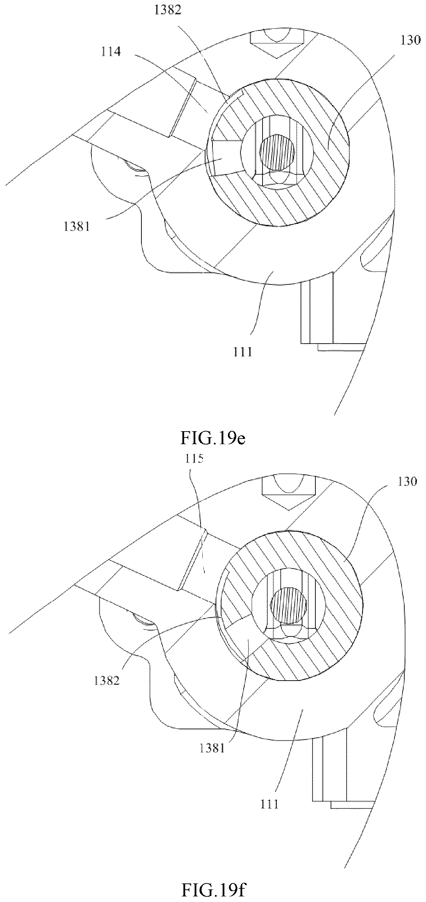

Referring to FIG. 18e and FIG. 19e, in the structure shown in FIG. 18e and FIG. 19e, when the valve core 130 rotates 120 degrees, it can be seen that the overlapping area of the first air outlet channel 138 of the valve core 130 communicating with the outer side air supply hole 114 of the valve body 110 changes, the area for allowing the gas to pass per unit time decreases. The output of gas flow decreases, and the overlapping area between the first outlet hole 1391 of the second outlet channel 139 of the valve core 130 and the inner side air supply hole 115 of the valve body 110 decreases. The second air outlet hole 1392 is also fully communicated with the inner side air supply hole 115 of the valve body 110. At this time, the inner side flow is determined by the remaining communication area of the first air outlet 1391 and the aperture area of the second air outlet 1392. The smaller the area, the smaller the inner side flow. At this time, the outer side fire and the inner side fire are large.

Referring to FIG. 18f and FIG. 19f, in the structure shown in FIG. 18f and FIG. 19f, when the valve core 130 rotates 150 degrees, it can be seen that the overlapping area between the first air outlet channel 138 of the valve core 130 and the outer side air supply hole 114 of the valve body changes, and the area for allowing the gas to pass per unit time decreases. The output of the gas flow decreases. The second air outlet hole 1392 and the third air outlet hole 1393 of the second air outlet channel 139 of the valve core 130 are fully communicated with the inner side air supply hole 115 of the valve body 110. The area of the third air outlet 1393 is smaller than a remaining contact area of the first air outlet 1391 at 120 degrees. At this time, the inner side flow is smaller than that at 120 degrees. The smaller the aperture makes the inner side flow smaller. At this time, the outer side fire and the inner side fire are middle.

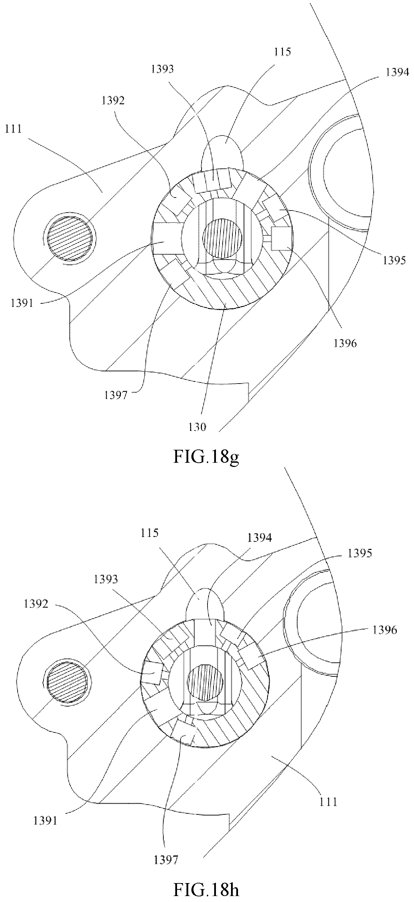

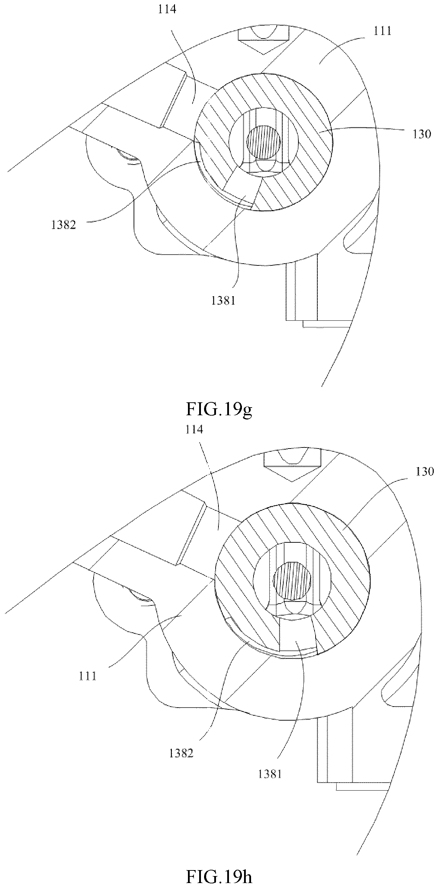

Referring to FIG. 18g and FIG. 19g, in the structure shown in FIG. 18g and FIG. 19g, when the valve core 130 rotates 180 degrees, it can be seen that the overlapping area of the first air outlet channel 138 of the valve core 130 communicating with the outer side air supply hole 114 of the valve body 110 changes, and the area for allowing the gas to pass per unit time decreases. The output of the gas flow decreases. At this time, the outer side flow is very small. The first air outlet hole 1391 of the second air outlet channel 139 of the valve core 130 is no longer communicated with the inner side air supply hole 115, and the third air outlet 1393 continues to be fully communicated with the inner side air supply hole 115 of the valve body 110. Therefore, the inner side flow at 180 degrees is smaller than that at 150 degrees. At this time, the outer side fire and the inner side fire are small.

It can be seen from the above that the flow of the four sections changes from 90 degrees to 180 degrees, and the gas flow of the outer side and inner side increases or decreases synchronously.

Referring to FIG. 18h and FIG. 19h, in the structure shown in FIG. 18h and FIG. 19h, the valve core 130 rotates 210 degrees. It can be seen that the first air outlet channel 138 of the valve core 130 is fully disconnected from the outer side air supply hole 114 of the valve body 110, and the outer side has no fire. The third air outlet hole 1393 of the second air outlet channel 139 of the valve core 130 is no longer communicated with the inner side air supply hole 115, and the fourth air outlet hole 1394 is fully communicated with the inner side air supply hole 115 of the valve body 110. At this time, the aperture of the fourth air outlet hole 1394 is large, the gas flow in the inner side is large, and there is no fire at both the outer side and the inner side.

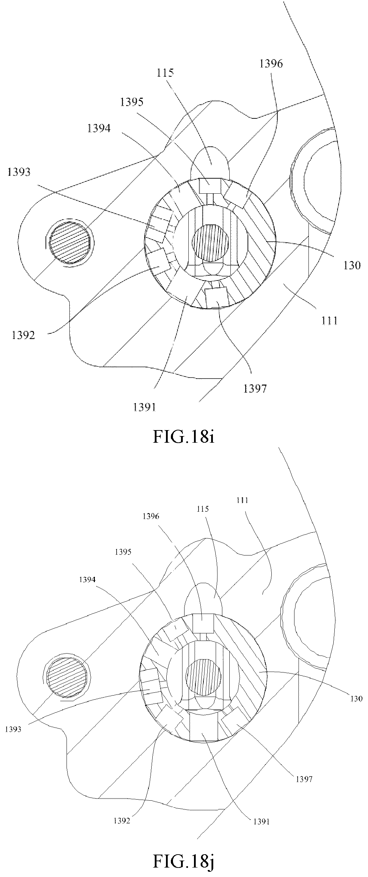

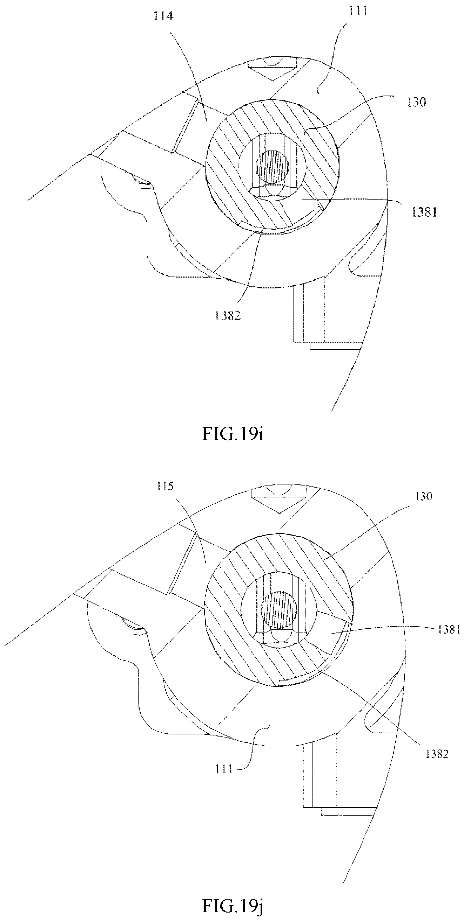

Referring to FIG. 18i and FIG. 19i, in the structure shown in FIG. 18i and FIG. 19i, the valve core 130 rotates 240 degrees. It can be seen that the first air outlet channel 138 of the valve core 130 is fully disconnected from the outer side air supply hole 114 of the valve body 110, and the outer side has no fire. The fourth air outlet hole 1394 of the second air outlet channel 139 of the valve core 130 is no longer communicated with the inner side air supply hole 115, and the fifth air outlet hole 1395 begins to be fully communicated with the inner side air supply hole 115 of the valve body 110. At this time, the aperture of the fifth air outlet 1395 is small, and the gas flow of the inner side decreases. At this time, there is no fire at the outer side and a middle fire at the inner side.

Referring to FIG. 18j and FIG. 19j, in the structure shown in FIG. 18j and FIG. 19j, the valve core 130 rotates 270 degrees. It can be seen that the first air outlet channel 138 of the valve core 130 is fully disconnected from the outer side air supply hole 114 of the valve body 110, and the outer side has no fire. The fifth air outlet hole 1395 of the second air outlet channel 139 of the valve core 130 is no longer communicated with the inner side air supply hole 115, and the sixth air outlet hole 1396 begins to be fully communicated with the inner side air supply hole 115 of the valve body 110. At this time, the aperture of the sixth air outlet hole 1396 is smaller than that of the fifth air outlet 1395, and the gas flow in the inner side is reduced. At this time, there is no fire in the outer side and there is little fire in the inner side.

According to the above contents, the plug valve 100 is provided with a plurality of air outlet holes in the second air outlet channel 139, which cooperates with the positioning function of the damper switch 140 to realize the accurate control of the inner side flame and meet people's different cooking needs.

## Claims

1. A plug valve (100), applied to a gas stove, comprising:
a valve body (110);
a valve rod (120) partially extending into the valve body (110) and being rotatable relative to the valve body (110); and
a damper switch (140) provided outside of the valve body (110), wherein the valve rod (120) passes through a shaft hole (1444) in the damper switch (140), wherein the damper switch (140) comprising,
a housing (141) provided with a through hole (1423) extending through a thickness direction of the housing (141) and provided with a mounting part fixedly mounting the damper switch (140) as a whole on an exterior of the plug valve (100); and
a rotation member (144) housed in the housing (141) and being rotatable relative to the housing (141), the rotation member (144) being provided with a shaft hole (1444) corresponding and communicating with the through hole (1423), and the valve rod (120) passing through the shaft hole (1444) for mounting;
wherein either the rotation member (144) or the housing (141) is provided with a plurality of positioning grooves (1443) arranged at an interval along a rotation direction of the valve rod (120), and the other one of the rotation member (144) and the housing (141) is provided with an elastic abutting assembly (145), wherein in a process of the valve rod (120) driving the rotation member (144) to rotate, the elastic abutting assembly (145) fits into one of the plurality of positioning grooves (1443);
**characterized in that**
the plug valve (100) further comprises a microswitch (150) detachably connected to the valve body (110), and the microswitch (150) is fixed to the damper switch (140) and the valve body (110) through a connecting member.

2. The plug valve (100) according to claim 1, wherein the housing (141) is provided with the elastic abutting assembly (145), and a periphery of the rotation member (144) is provided with the plurality of positioning grooves (1443), wherein the elastic abutting assembly (145) comprises an elastic member (146) and an abutting member (147), an end of the elastic member (146) abutting against the housing (141), and an other end of the elastic member (146) abutting against the abutting member (147), wherein the elastic member (146) provides elasticity to drive the abutting member (147) to abut against a groove wall of each of the plurality of positioning grooves (1443) and a prompt sound is generated.

3. The Z r plug valve (100) according to claim 2, wherein the housing (141) is provided with an extension part (1432) extended outward, a mounting groove (1433) being provided inside the extension part (1432), wherein an end of the elastic member (146) extends into the mounting groove (1433), and an other end of the elastic member (146) extends out of the mounting groove (1433) and abuts against the abutting member (147).

4. The plug valve (100) according to claim 2 or 3, wherein a side of the abutting member (147) facing the rotation member (144) has an arc contact surface, and an opening of each of the plurality of positioning grooves (1443) has a shape that fits with an outer contour shape of the abutting member (147).

5. The plug valve (100) according to any one of claims 1 to 4, wherein the mounting part is a connecting bracket (1434) extending along a side of the housing (141), the connecting bracket (1434) fixedly connecting to the plug valve (100).

6. The plug valve (100) according to any one of claims 1 to 5, wherein the rotation member (144) comprises a body part (1441) with the plurality of positioning grooves (1443) arranged at an interval on a periphery of the body part (1441) and a positioning column (1442) connected to the body part (1441) and extending along a side of the body part (1441), the positioning column (1442) and the body part (1441) being penetrated by the shaft hole (1444), wherein the housing (141) is also provided with a positioning cylinder (1422) extending outward from a periphery of the through hole (1423), the positioning column (1442) fitting with a shaft hole of the positioning cylinder (1422).

7. The plug valve (100) according to any one of claims 1 to 6, wherein the housing (141) comprises a base (143) and a cover (142) detachably connected to the base (143), the base (143) and the cover (142) being penetrated by the through hole (1423), wherein the cover (142) comprises a cover body (1421) provided with the through hole (1423) and the positioning cylinder (1422) connected to the cover body (1421), the positioning cylinder (1422) extending from the periphery of the through hole (1423) to an exterior of the cover body (1421).

8. The plug valve (100) according to any one of claims 1 to 7, wherein the valve body (110) is provided with a locking hole (1126), and a mounting part is provided with a connecting hole (1435), wherein the microswitch (150) is provided with a mounting hole (151) aligning with the connecting hole (1435) and the locking hole (1126), wherein the damper switch (140), the microswitch (150) and the valve body (110) are fixed together through the connecting member which passes through the connecting hole (1435) and the mounting hole (151) and is locked in the locking hole (1126).

9. The plug valve (100) according to any one of claims 1 to 8, wherein a limit groove (1125) is also provided in an exterior of the valve body (110), and the microswitch (150) is embedded in the limit groove (1125).

10. The plug valve (100) according to any one of claims 1 to 9, wherein an upper part of the valve body (110) is provided with a connecting cylinder (1122) extending upward, the valve rod (120) extending through the connecting cylinder (1122) and into the valve body (110), the connecting cylinder (1122) being provided with a notch (1123) passing through the connecting cylinder (1122) in a radial direction of the connecting cylinder (1122), and the microswitch (150) extending through the notch (1123) to contact with the valve rod (120).

11. The plug valve (100) according to claim 10, wherein a bottom of the housing (141) is provided with an annular groove (1436) surrounding the through hole (1423), an inner wall of the annular groove (1436) being convexly and radially provided with a positioning boss (1437), an end of the connecting cylinder (1122) being embedded in the annular groove (1436), and the positioning boss (1437) fitting into the notch (1123).

12. A gas stove comprising a burner and a plug valve (100) according to any one of claims 1 to 11, wherein the plug valve (100) is connected to the burner.

## Patentansprüche

1. Absperrventil (100) an einem Gasherd, umfassend:
einen Ventilkörper (110);
eine Ventilstange (120), die sich teilweise in den Ventilkörper (110) erstreckt und relativ zum Ventilkörper (110) drehbar ist; und
einen außerhalb des Ventilkörpers (110) vorgesehenen Dämpferschalter (140), wobei die Ventilstange (120) durch ein Wellenloch (1444) im Dämpferschalter (140) hindurchgeht, wobei der Dämpferschalter (140) Folgendes umfasst:
ein Gehäuse (141), das mit einem Durchgangsloch (1423) versehen ist, das sich durch eine Dickenrichtung des Gehäuses (141) erstreckt, und mit einem Befestigungsteil versehen ist, das den Dämpferschalter (140) als Ganzes fest an einer Außenseite des Absperrventils (100) befestigt; und
ein Drehelement (144), das in dem Gehäuse (141) untergebracht ist und relativ zu dem Gehäuse (141) drehbar ist, wobei das Drehelement (144) mit einem Wellenloch (1444) versehen ist, das dem Durchgangsloch (1423) entspricht und mit diesem in Verbindung steht, und wobei die Ventilstange (120) zur Befestigung durch das Wellenloch (1444) hindurchgeht;
wobei entweder das Drehelement (144) oder das Gehäuse (141) mit einer Vielzahl von Positionierungsnuten (1443) versehen ist, die in einem Abstand entlang einer Drehrichtung der Ventilstange (120) angeordnet sind, und das andere des Drehelements (144) und des Gehäuses (141) mit einer elastischen Anschlaganordnung (145) versehen ist, wobei während des Vorgangs, bei dem die Ventilstange (120) das Drehelement (144) antreibt, sich zu drehen, wobei die elastische Anschlaganordnung (145) in eine der mehreren Positionierungsnuten (1443) eingreift;
**dadurch gekennzeichnet, dass**
das Absperrventil (100) ferner einen Mikroschalter (150) umfasst, der lösbar mit dem Ventilkörper (110) verbunden ist, und der Mikroschalter (150) über ein Verbindungselement am Dämpferschalter (140) und am Ventilkörper (110) befestigt ist.

2. Absperrventil (100) gemäß Anspruch 1, wobei das Gehäuse (141) mit der elastischen Anschlaganordnung (145) versehen ist, und ein Umfang des Drehelements (144) mit einer Vielzahl von Positionierungsnuten (1443) versehen ist, wobei die elastische Anschlaganordnung (145) ein elastisches Element (146) und ein Anschlagelement (147) umfasst, wobei ein Ende des elastischen Elements (146) am Gehäuse (141) anliegt und ein anderes Ende des elastischen Elements (146) an dem Anschlagelement (147) anliegt, wobei das elastische Element (146) Elastizität bereitstellt, um das Anschlagelement (147) anzutreiben, an einer Nutwand jeder der Vielzahlt von Positionierungsnuten (1443) anzuliegen, und ein Signalton erzeugt wird.

3. Absperrventil (100) gemäß Anspruch 2, wobei das Gehäuse (141) mit einem sich nach außen erstreckenden Verlängerungsteil (1432) versehen ist, wobei eine Befestigungsnut (1433) innerhalb des Verlängerungsteils (1432) vorgesehen ist, wobei sich ein Ende des elastischen Elements (146) in die Befestigungsnut (1433) erstreckt, und sich ein anderes Ende des elastischen Elements (146) aus der Befestigungsnut (1433) heraus erstreckt und an dem Anschlagelement (147) anliegt.

4. Absperrventil (100) gemäß Anspruch 2 oder 3, wobei eine dem Drehelement (144) zugewandte Seite des Anschlagelements (147) eine bogenförmige Kontaktfläche aufweist und eine Öffnung jeder der Vielzahl von Positionierungsnuten (1443) eine Form aufweist, die zu einer Außenkonturform des Anschlagelements (147) passt.

5. Absperrventil (100) gemäß einem der Ansprüche 1 bis 4, wobei das Befestigungsteil eine Verbindungshalterung (1434) ist, die sich entlang einer Seite des Gehäuses (141) erstreckt, wobei die Verbindungshalterung (1434) fest mit dem Absperrventil (100) verbunden ist.

6. Absperrventil (100) gemäß einem der Ansprüche 1 bis 5, wobei das Drehelement (144) einen Körperteil (1441) mit der Vielzahl von Positionierungsnuten (1443), die in einem Abstand an einem Umfang des Körperteils (1441) angeordnet sind, und eine Positionierungssäule (1442) umfasst, die mit dem Körperteil (1441) verbunden ist und sich entlang einer Seite des Körperteils (1441) erstreckt, wobei die Positionierungssäule (1442) und das Körperteil (1441) von dem Wellenloch (1444) durchdrungen sind, wobei das Gehäuse (141) außerdem mit einem Positionierungszylinder (1422) versehen ist, der sich von einem Umfang des Durchgangslochs (1423) nach außen erstreckt, wobei die Positionierungssäule (1442) mit ein Wellenloch des Positionierungszylinders (1422) eingepasst ist.

7. Absperrventil (100) gemäß einem der Ansprüche 1 bis 6, wobei das Gehäuse (141) eine Basis (143) und eine Abdeckung (142) umfasst, die abnehmbar mit der Basis (143) verbunden ist, wobei die Basis (143) und die Abdeckung (142) von dem Durchgangsloch (1423) durchdrungen sind, wobei die Abdeckung (142) einen mit dem Durchgangsloch (1423) versehenen Abdeckungskörper (1421) und den mit dem Abdeckungskörper (1421) verbundenen Positionierungszylinder (1422) umfasst, wobei sich der Positionierungszylinder (1422) vom Umfang des Durchgangslochs (1423) zu einer Außenseite des Abdeckungskörpers (1421) erstreckt.

8. Absperrventil (100) gemäß einem der Ansprüche 1 bis 7, wobei der Ventilkörper (110) mit einem Verriegelungsloch (1126) versehen ist und ein Befestigungsteil mit einem Verbindungsloch (1435) versehen ist, wobei der Mikroschalter (150) mit einem Befestigungsloch (151) versehen ist, das mit dem Verbindungsloch (1435) und dem Verriegelungsloch (1126) ausgerichtet ist, wobei der Dämpferschalter (140), der Mikroschalter (150) und der Ventilkörper (110) durch das Verbindungselement, das durch das Verbindungsloch (1435) und das Befestigungsloch (151) hindurchgeht und im Verriegelungsloch (1126) verriegelt ist, miteinander verbunden sind.

9. Absperrventil (100) gemäß einem der Ansprüche 1 bis 8, wobei eine Begrenzungsnut (1125) ebenfalls an der Außenseite des Ventilkörpers (110) vorgesehen ist und der Mikroschalter (150) in die Begrenzungsnut (1125) eingebettet ist.

10. Absperrventil (100) gemäß einem der Ansprüche 1 bis 9, wobei ein oberer Teil des Ventilkörpers (110) mit einem sich nach oben erstreckenden Verbindungszylinder (1122) versehen ist, wobei sich die Ventilstange (120) durch den Verbindungszylinder (1122) und in den Ventilkörper (110) erstreckt, wobei der Verbindungszylinder (1122) mit einer Kerbe (1123) versehen ist, die durch den Verbindungszylinder (1122) in einer Radialrichtung des Verbindungszylinders (1122) verläuft, und sich der Mikroschalter (150) durch die Kerbe (1123) erstreckt, um mit der Ventilstange (120) in Kontakt zu kommen.

11. Absperrventil (100) gemäß Anspruch 10, wobei ein Boden des Gehäuses (141) mit einer ringförmigen Nut (1436) versehen ist, die das Durchgangsloch (1423) umgibt, wobei eine Innenwand der ringförmigen Nut (1436) konvex und radial mit einem Positionierungsvorsprung (1437) versehen ist, ein Ende des Verbindungszylinders (1122) in die ringförmige Nut (1436) eingebettet ist und der Positionierungsvorsprung (1437) in die Kerbe (1123) eingepasst ist.

12. Gasherd umfassend einen Brenner und ein Absperrventil (100) gemäß einem der Ansprüche 1 bis 11, wobei das Absperrventil (100) mit dem Brenner verbunden ist.

## Revendications

1. Vanne à boisseau (100) destinée à être utilisée sur une cuisinière à gaz, comprenant :
un corps de vanne (110) ;
une tige de vanne (120) s'étendant partiellement dans le corps de vanne (110) et pouvant tourner par rapport au corps de vanne (110) ; et
un interrupteur d'amortisseur (140) prévu à l'extérieur du corps de vanne (110), dans lequel la tige de vanne (120) passe à travers un trou d'arbre (1444) dans l'interrupteur d'amortisseur (140), dans lequel l'interrupteur d'amortisseur (140) comprend
un boîtier (141) muni d'un trou traversant (1423) s'étendant dans un sens d'épaisseur du boîtier (141) et muni d'une partie de montage fixant de manière rigide l'interrupteur d'amortisseur (140) dans son ensemble à un extérieur de la vanne à boisseau (100) ; et
un élément rotatif (144) logé dans le boîtier (141) et pouvant tourner par rapport au boîtier (141), l'élément rotatif (144) étant muni d'un trou d'arbre (1444) correspondant et communiquant avec le trou traversant (1423), et la tige de vanne (120) passant à travers le trou d'arbre (1444) pour le montage ;
dans lequel soit l'élément rotatif (144), soit le boîtier (141) est muni d'une pluralité de rainures de positionnement (1443) disposées à un intervalle régulier le long d'une direction de rotation de la tige de vanne (120), et l'autre élément parmi l'élément rotatif (144) et le boîtier (141) est muni d'un ensemble de butée élastique (145), dans lequel, dans un processus où la tige de vanne (120) entraîne l'élément rotatif (144) à tourner, l'ensemble de butée élastique (145) s'insère dans l'une de la pluralité de rainures de positionnement (1443);
**caractérisé en ce que**
la vanne à boisseau (100) comprend en outre un micro-interrupteur (150) relié de manière amovible au corps de vanne (110), et le micro-interrupteur (150) est fixé à l'interrupteur d'amortisseur (140) et au corps de vanne (110) par l'intermédiaire d'un élément de connexion.

2. La vanne à boisseau (100) selon la revendication 1, dans laquelle le boîtier (141) est muni de l'ensemble de butée élastique (145), et une périphérie de l'élément rotatif (144) est pourvue de la pluralité de rainures de positionnement (1443), dans lequel l'ensemble de butée élastique (145) comprend un élément élastique (146) et un élément de butée (147), une extrémité de l'élément élastique (146) butant contre le boîtier (141), et une autre extrémité de l'élément élastique (146) venant en butée contre l'élément de butée (147), dans lequel l'élément élastique (146) fournit de l'élasticité pour entraîner l'élément de butée (147) à venir en butée contre une paroi de rainure de chacune de la pluralité de rainures de positionnement (1443) et un son rapide est généré.

3. La vanne à boisseau (100) selon la revendication 2, dans laquelle le boîtier (141) est muni d'une partie d'extension (1432) s'étendant vers l'extérieur, une rainure de montage (1433) étant prévue à l'intérieur de la partie d'extension (1432), dans laquelle une extrémité de l'élément élastique (146) s'étend dans la rainure de montage (1433), et une autre extrémité de l'élément élastique (146) s'étend hors de la rainure de montage (1433) et vient en butée contre l'élément de butée (147).

4. La vanne à boisseau (100) selon la revendication 2 ou 3, dans laquelle un côté de l'élément de butée (147) faisant face à l'élément rotatif (144) présente une surface de contact arquée, et une ouverture de chacune des multiples rainures de positionnement (1443) présente une forme qui s'adapte à une forme du contour extérieur de l'élément de butée (147).

5. Vanne à boisseau (100) selon l'une quelconque des revendications 1 à 4, dans laquelle la partie de montage est un support de connexion (1434) s'étendant le long d'un côté du boîtier (141), le support de connexion (1434) étant relié de manière fixe à la vanne à boisseau (100).

6. La vanne à boisseau (100) selon l'une quelconque des revendications 1 à 5, dans laquelle l'élément rotatif (144) comprend une partie de corps (1441) avec la pluralité de rainures de positionnement (1443) disposées à un intervalle régulier sur une périphérie de la partie de corps (1441) et une colonne de positionnement (1442) reliée à la partie de corps (1441) et s'étendant le long d'un côté de la partie de corps (1441), la colonne de positionnement (1442) et la partie de corps (1441) étant traversées par le trou d'arbre (1444), dans lequel le boîtier (141) est également muni d'un cylindre de positionnement (1422) s'étendant vers l'extérieur à partir d'une périphérie du trou traversant (1423), la colonne de positionnement (1442) s'adaptant à un trou d'arbre du cylindre de positionnement (1422).

7. La vanne à boisseau (100) selon l'une quelconque des revendications 1 à 6, dans laquelle le boîtier (141) comprend une base (143) et un couvercle (142) relié de manière amovible à la base (143), la base (143) et le couvercle (142) étant traversés par le trou traversant (1423), dans lequel le couvercle (142) comprend un corps de couvercle (1421) muni du trou traversant (1423) et le cylindre de positionnement (1422) relié au corps de couvercle (1421), le cylindre de positionnement (1422) s'étendant depuis la périphérie du trou traversant (1423) vers l'extérieur du corps de couvercle (1421).

8. La vanne à boisseau (100) selon l'une quelconque des revendications 1 à 7, dans laquelle le corps de vanne (110) est muni d'un trou de verrouillage (1126), et une partie de montage est munie d'un trou de connexion (1435), dans laquelle le micro-interrupteur (150) est muni d'un trou de montage (151) aligné avec le trou de connexion (1435) et le trou de verrouillage (1126), dans lequel l'interrupteur d'amortisseur (140), le micro-interrupteur (150) et le corps de vanne (110) sont fixés ensemble par l'intermédiaire de l'élément de connexion qui passe à travers le trou de connexion (1435) et le trou de montage (151) et est verrouillé dans le trou de verrouillage (1126).

9. La vanne à boisseau (100) selon l'une quelconque des revendications 1 à 8, dans laquelle une rainure de butée (1125) est également prévue à l'extérieur du corps de vanne (110), et le micro-interrupteur (150) est encastré dans la rainure de butée (1125).

10. La vanne à boisseau (100) selon l'une quelconque des revendications 1 à 9, dans laquelle une partie supérieure du corps de vanne (110) est pourvue d'un cylindre de connexion (1122) s'étendant vers le haut, la tige de vanne (120) s'étendant à travers le cylindre de connexion (1122) et dans le corps de vanne (110), le cylindre de connexion (1122) étant muni d'une encoche (1123) traversant le cylindre de connexion (1122) dans une direction radiale du cylindre de connexion (1122), et le micro-interrupteur (150) s'étendant à travers l'encoche (1123) pour entrer en contact avec la tige de vanne (120).

11. La vanne à boisseau (100) selon la revendication 10, dans laquelle un fond du boîtier (141) est muni d'une rainure annulaire (1436) entourant le trou traversant (1423), une paroi intérieure de la rainure annulaire (1436) étant pourvue de manière convexe et radiale d'un bossage de positionnement (1437), une extrémité du cylindre de connexion (1122) étant encastrée dans la rainure annulaire (1436), et le bossage de positionnement (1437) s'emboîtant dans l'encoche (1123).

12. Cuisinière à gaz comprenant un brûleur et une vanne à boisseau (100) selon l'une quelconque des revendications 1 à 11, dans laquelle la vanne à boisseau (100) est reliée au brûleur.
